# EUROPEAN PATENT APPLICATION

(11) **EP 3 309 131 A1**
(43) Date of publication of application: **18.04.2018**
(21) Application number: 16020399.8
(22) Date of filing: 13.10.2016
(51) Int. Cl.: C02F 3/10

(54) **CURTAINS FOR RETENTION OF BACTERIA IN WASTEWATER**

(71) Applicant: Zhdan, Lassovsky Hernández Alejandro, 41013 Sevilla (ES)
(72) Inventor: Zhdan, Lassovsky Hernández Alejandro, 41013 Sevilla (ES)

(57) **Abstract**

Bacterial Nesting System is a system to purify wastewater (urban, agricultural or industrial - including from mining), without energy consumption, comprised by curtains made of geotextile, fastened and positioned parallel next to each other and anchored to the edges, reaching from the surface of the water down to the desired depth, forcing the water to pass through the system and serving for bacteria to develop colonies, to develop their own ecosystem (based on wastewater) and to remain at the desired site and thus to purge wastewater without having to discard the bacteria and without having to wait for the colonies to develop again.

## Description

**Technical field.** The present invention (i.e. BNS) would purge wastewater of any type (agricultural, industrial or urban) by using geotextile fixed curtains allowing bacteria to form and develop without further intervention or energy and thus to purge wastewater.
**Background art.** As far as I know, current systems of organically sewage treatment are facing the problem of losing the beneficial bacteria; in order to prevent such loss, a number of technologies have developed an assortment of components designed to remain within the confines of the treatment zones and provide large surface areas upon which bacteria establish structures known as biofilms, e.g. Moving-Bed Biofilm Reactors, Trickle-Bed Filters, Rotating Biological Reactors. Nevertheless, a great number of bacteria still pass through the treatment zones.

The present invention Bacterial Nesting System ("**BNS**") would serve for bacteria to develop colonies and develop their own ecosystem, based on wastewater (urban, agricultural or industrial) and, most importantly, to remain at the desired site and thus purge wastewater without having to be discarding them and having to wait for the colonies to develop again. The debug of wastewater would be made without added energy costs.

Curtains attached by a tensioning cable, the curtains are placed vertically from the surface of the body of water, placed to the desired depth (but to at least 20 centimetres), reaching 10 meters deep, the curtains are sewn both ends folded over PVC pipes both above and below a cable going from side to side (i.e. the guide), correct positioning and buoyancy needed; they can be introduced and fixed into position.
The curtain system is set in wastewater treatment ponds or existing rafts to debug more wastewater than currently, since bacteria are found in the anchored curtains and these are fed with food that these waters contain, also it saves energy costs by not having to use aerators prolonged.
BNS succeeds in making the sewage reach higher levels, as it helps the bacteria to remain fixed at a point that will be a mandatory step for waste water passing through there, so there will be maximum amount of water passing through the curtain system. All this without using more energy than longer consumes the sewage or water raft to move the entry point to the exit.

### Brief description of drawings.

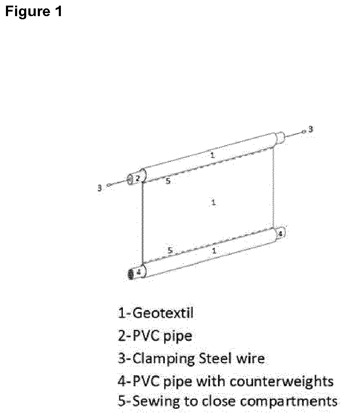

Figure 1 depicts the main component of the BNS, i.e. a curtain
Figure 2 is a perspective view of the BNS

### Detailed description of the invention.

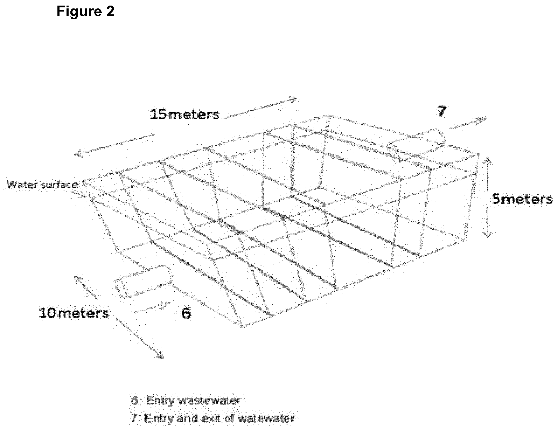

Two people, one from each end, carry the curtain of geotextile (1) to its position and let it sit on the anchors to which it has been fixed (e.g. with concrete) with the clamping steel wire (3). The curtain is introduced from the bottom; the PVC tube above (2) must be empty, while the PVC tube that is down (4) must be filled with stones to sink better the rest of the curtain (the sewing (5) is used to close compartments). Thus, the water and the weight of the curtain would make the curtain go slowly sinking, until you reach the floor of the tank, where is the thread in tension across the curtain and tubes top PVC end to end, so that once the curtain is in place it cannot pendulate much and make a barrier so that the residual water could be in contact with the greatest number of bacteria. The curtain is in subjection above the water; the curtain must stay higher than the surface of the water and the greatest effect occurs piston possible (Figure 2).
Industrial application. BNS would purge wastewater of any type (agricultural, industrial or urban) by using geotextile fixed curtains allowing bacteria to form and develop without further intervention and thus to purge wastewater.

## Claims

1. The subject-matter of the invention is a system of purifying all types of wastewater without using additional energy, with fixed geotextile curtains in suspension. The main feature is the number of bacterial colonies that develop and anchor in each of the curtains once the water gets to pass repeatedly through the same surface of the curtain in the tank. The more an optimal preferential flow of water is ensured, the more effective the circuit is. Thus, a space of 5 centimetres between curtain and curtain must be ensured; the curtains must not touch each other so as to let the water pass through the optimal preferential flow.

2. **Characterized by**:
- a plurality of fastening bioreactor curtains, each curtain comprising:
- at least one clamping (seam) at the upper PVC tube, for introducing each PVC tube;
- at least one upper PVC tube at the top, with a hole on each side to allow the steel wire cross the tube and get the curtain fixed
- at least one steel wire for adjustment of the curtain;
- the wire is connected to a wall, for ensuring stiffening;
- at least one negatively buoyant lower PVC tube that stiffens the system; and
- a woven or thermoplastic curtain extending vertically between the upper and lower PVC tubes.

3. **Characterized by** at least one PVC pipe at the bottom connected to the curtain of thermoplastic/geotextile material by the bottom seam, leaving the curtain extend vertically between the top and bottom.

4. **Characterized by** a thermoplastic curtain extending vertically between the upper and lower PVC tubes. PVC tube bottom can be made of one piece or several, like the top PVC tube and must be filled with stones.

5. **Characterized by** the fact that each curtain attached is longer than 10 centimetres and extends to a depth of at least 20 centimetres.

6. **Characterized by** the fact that each curtain is separated from the next curtain by at least 5 centimetres.

7. **Characterized in that** the curtain is made from woven nylon or thermoplastic material.

8. Characterized as a semi rigid clamping system that allows bacteria from wastewater to form and anchor in each of the curtains once the water gets to pass repeatedly through the same surface of the curtain in the tank, thus acting as a geotextile filter for purifying wastewater. The cleaned water meets the Romanian and European Standards, i.e. ROMANIA
Oxygen Biochimic Consumption "CBO5": 25mg/l
Oxygen Chimic Consumption "CCO": 125mg/l
Solids in suspension: 60mg/l
EUROPE
Oxygen Biochimic Consumption CBO5: 50mg/l
Oxygen Chimic Consumption CCO: 125mg/l
Solids in suspension: 50mg/l
